# EUROPEAN PATENT APPLICATION

(11) **EP 4 492 618 A1**
(43) Date of publication of application: **15.01.2025**
(21) Application number: 23185043.9
(22) Date of filing: 12.07.2023
(51) Int. Cl.: H02J 7/00, B60L 58/10, H02J 7/34

(54) **PRE-CHARGING OF LOAD USING A PLURALITY OF BATTERY PACKS**

(71) Applicant: VOLVO TRUCK CORPORATION, 405 08 Göteborg (SE)
(72) Inventor: LIDSTRÖM, Emil, 423 56 TORSLANDA (SE); TUTUSAUS MARTINEZ, David, VÄNERSBORG (SE)
(74) Representative: Ström & Gulliksson AB

(57) **Abstract**

A computer system (100) is presented. The computer system (100) comprises processing circuitry (110) configured to control a first battery pack (210a) and a second battery pack (210b) to provide pre-charge to a load (29). The processing circuitry (110) is further configured to configure the first battery pack (210b) to provide pre-charge in a supporting pre-charge mode, and during pre-charge in the supporting pre-charge mode, monitor a first voltage difference indicator indicating a difference between a load voltage (314) and a first battery pack voltage (312a). The processing circuitry (110) is further configured to, responsive to the first voltage difference indicator indicating that first battery pack voltage (312a) is at or below the load voltage (314), control the first battery pack (210a) to discontinue pre-charge of the load (29).

## Description

### TECHNICAL FIELD

The disclosure relates generally to power management. In particular aspects, the disclosure relates to pre-charging of a load. The disclosure can be applied marine vessels, industrial applications and vehicles, specifically heavy-duty vehicles, such as trucks, buses, and construction equipment, among other vehicle types. Although the disclosure may be described with respect to a particular vehicle, the disclosure is not restricted to any particular vehicle.

### BACKGROUND

Pre-charging is a technique used to limit an inrush current that occurs when energizing a load. This is specifically the case for inductive loads such as a motor or transformer. Inductive loads are characterized by their ability to store energy in their magnetic field, and when power is initially applied, this stored energy may cause a surge of current to flow. Similarly, largely capacitive loads exhibit, for an initial time period when powered, almost zero resistance. A voltage traction bus of a vehicle is both inductive and capacitive. Pre-charging involves gradually applying voltage to the load, allowing it to build up the magnetic field and reduce the inrush current.

The purpose of pre-charging is to protect the electrical system from the excessive currents that may occur during the energization of loads. High inrush currents may cause voltage sags, trip circuit breakers, damage components, and/or disrupt the normal operation of other devices connected to the same power source. To exemplify, if a voltage drop over e.g. contactors between a battery and a load is too high, there may be an arch through the small air gap before the contactor is completely closed due to the inrush current. This may damage or even weld the contactor.

However, there are some potential problems associated with pre-charging loads. Pre-charging generally requires additional circuitry and control mechanisms to gradually apply the voltage to the load. This may increase the complexity of the system design and add extra components, leading to higher costs and maintenance requirements. It also takes time to complete the pre-charging process, which may not be suitable for applications where quick energization is required. During the pre-charging process, voltage is applied gradually, which means the load receives an increasing voltage until the pre-charging is complete. This may result in a voltage drop, potentially affecting the operation of other devices connected to the same power source. The reliability of the control system responsible for pre-charging is important. If the control system malfunctions or fails, it may cause improper pre-charging, resulting in higher inrush currents and potential damage to the load or the electrical system.

### SUMMARY

According to a first aspect of the disclosure, a computer system is presented. The computer system comprises processing circuitry configured to control a first battery pack and a second battery pack to provide pre-charge to a load, and to configure the first battery pack to provide pre-charge in a supporting pre-charge mode. The processing circuitry is further configured to, during pre-charge in the supporting pre-charge mode, monitor a first voltage difference indicator indicating a difference between a load voltage and a first battery pack voltage, and responsive to the first voltage difference indicator indicating that first battery pack voltage is at or below the load voltage, control the first battery pack to discontinue pre-charge of the load. The first aspect of the disclosure may seek to reduce potential drawback with uneven voltages of batteries joining to pre-charge a load. A technical benefit may include reducing a time it takes to pre-charge a load.

Optionally in some examples, including in at least one preferred example, the processing circuitry is further configured to monitor a pre-charge current between the first battery pack and the load, and determine the first voltage difference indicator based on the pre-charge current. A technical benefit may include obtaining a readily available indication of if the battery pack is contributing to the pre-charging of the load or not.

Optionally in some examples, including in at least one preferred example, the processing circuitry is further configured to monitor the first battery pack voltage and the load voltage, and determine the first voltage difference indicator based on the first battery pack voltage and the load voltage. A technical benefit may include obtaining a readily available indication of if the battery pack is contributing to the pre-charging of the load or not.

Optionally in some examples, including in at least one preferred example, the processing circuitry is further configured to, during pre-charge in the supporting pre-charge mode, monitor a second voltage difference indicator indicating a difference between the load voltage and a second battery pack voltage, and responsive to the second voltage difference indicator indicating that the second battery pack voltage is at or below the load voltage, control the first battery pack to discontinue pre-charge of the load. A technical benefit may include being able to respond also if the battery pack operating in the supporting pre-charge mode is charging other battery packs partaking in the pre-charge of the load.

Optionally in some examples, including in at least one preferred example, the processing circuitry is further configured to obtain at least one of an open cell voltage or a loaded cell voltages of each battery pack of a battery system comprising more than two battery packs, and select the first battery pack and the second battery pack by selecting a pair of battery packs of the two or more battery packs of the battery system having the lowest difference in open cell voltages and/or loaded cell voltages of each pair of battery packs of the two or more battery packs of the battery system. A technical benefit may include reducing a risk that the batteries used for pre-charging, at least initially, have different voltages.

Optionally in some examples, including in at least one preferred example, the processing circuitry is further configured to monitor a pre-charge current between the first battery pack and the load, and determine the first voltage difference indicator based on the pre-charge current; monitor the first battery pack voltage and the load voltage, and determine the first voltage difference indicator based on the first battery pack voltage and the load voltage; during pre-charge in the supporting pre-charge mode, monitor a second voltage difference indicator indicating a difference between the load voltage and a second battery pack voltage, and responsive to the second voltage difference indicator indicating that the second battery pack voltage is at or below the load voltage, control the first battery pack to discontinue pre-charge of the load; and obtain at least one of an open cell voltage or a loaded cell voltages of each battery pack of a battery system comprising more than two battery packs, and select the first battery pack and the second battery pack by selecting a pair of battery packs of the two or more battery packs of the battery system having the lowest difference in open cell voltages and/or loaded cell voltages of each pair of battery packs of the two or more battery packs of the battery system.

In a second aspect of the present disclosure, a computer implemented method is presented. The method comprises, controlling, by processing circuitry of a computer system, a first battery pack and a second battery pack to provide pre-charge to a load, and configuring, by the processing circuitry of the computer system, the first battery pack to provide pre-charge in a supporting pre-charge mode. The method further comprises, during pre-charge in the supporting pre-charge mode, monitoring, by the processing circuitry of the computer system, a first voltage difference indicator indicating a difference between a load voltage and a first battery pack voltage, and responsive to the first voltage difference indicator indicating that first battery pack voltage is at or below the load voltage, controlling, by the processing circuitry of the computer system, the first battery pack to discontinue pre-charge of the load. The second aspect of the disclosure may seek to reduce potential drawback with uneven voltages of batteries joining to pre-charge a load. A technical benefit may include reducing a time it take to pre-charge a load.

Optionally in some examples, including in at least one preferred example, the computer implemented method further comprises monitoring, by the processing circuitry of the computer system, a pre-charge current between the first battery pack and the load, and determining, by the processing circuitry of the computer system, the first voltage difference indicator based on the pre-charge current. A technical benefit may include obtaining a readily available indication of if the battery pack is contributing to the pre-charging of the load or not.

Optionally in some examples, including in at least one preferred example, the computer implemented method further comprises monitoring, by the processing circuitry of the computer system, the first battery pack voltage and the load voltage, and determining, by the processing circuitry of the computer system, the first voltage difference indicator based on the first battery pack voltage and the load voltage. A technical benefit may include obtaining a readily available indication of if the battery pack is contributing to the pre-charging of the load or not.

Optionally in some examples, including in at least one preferred example, the computer implemented method further comprises, during pre-charge in the supporting pre-charge mode, monitoring, by the processing circuitry of the computer system, a second voltage difference indicator indicating a difference between the load voltage and a second battery pack voltage, and responsive to the second voltage difference indicator indicating that the second battery pack voltage is at or below the load voltage, controlling, by the processing circuitry of the computer system, the first battery pack to discontinue pre-charge of the load. A technical benefit may include being able to respond also if the battery pack operating in the supporting pre-charge mode is charging other battery packs partaking in the pre-charge of the load.

Optionally in some examples, including in at least one preferred example, the computer implemented method further comprises, obtaining, by the processing circuitry of the computer system, at least one of an open cell voltage or a loaded cell voltages of each battery pack of a battery system comprising more than two battery packs, and selecting, by the processing circuitry of the computer system, the first battery pack and the second battery pack by selecting a pair of battery packs of the two or more battery packs of the battery system having the lowest difference in open cell voltages and/or loaded cell voltages of each pair of battery packs of the two or more battery packs of the battery system. A technical benefit may include reducing a risk that the batteries used for pre-charging, at least initially, have different voltages.

In a third aspect of the present disclosure, a vehicle is presented. The vehicle comprises a first battery pack, a second battery pack and the computer system of any one of the first aspect operatively connected to the first battery pack and the second battery pack.

Optionally in some examples, including in at least one preferred example, the vehicle is a heavy-duty vehicle.

In a fourth aspect of the present disclosure, a computer program product is presented. The computer program product comprises program code for performing, when executed by a processing circuitry of a computer system, the computer implemented method of the second aspect.

In a fifth aspect of the present disclosure, a non-transitory computer-readable storage medium is presented. The non-transitory computer-readable storage comprises instructions, which when executed by a processing circuitry of a computer system, cause the processing circuitry to perform the computer implemented method of the second aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1A** is a side view of an exemplary vehicle according to an example.
**FIG. 1B** is a schematic view of an exemplary vehicle according to an example.
**FIG. 2** is a schematic view of an exemplary battery pack operatively connected to a computer system according to an example.
**FIG. 3** is a schematic view of an exemplary battery pack operatively connected to a computer system according to an example.
**FIG. 4** is a schematic view of a pre-charge controller according to an example.
**FIG. 5** is a schematic view of a pre-charge controller according to an example.
**FIG. 6** is a block diagram of a battery system according to an example.
**FIG. 7** is a schematic view method for providing pre-charge to a load according to an example.
**FIG. 8** is a schematic view of a computer program product according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

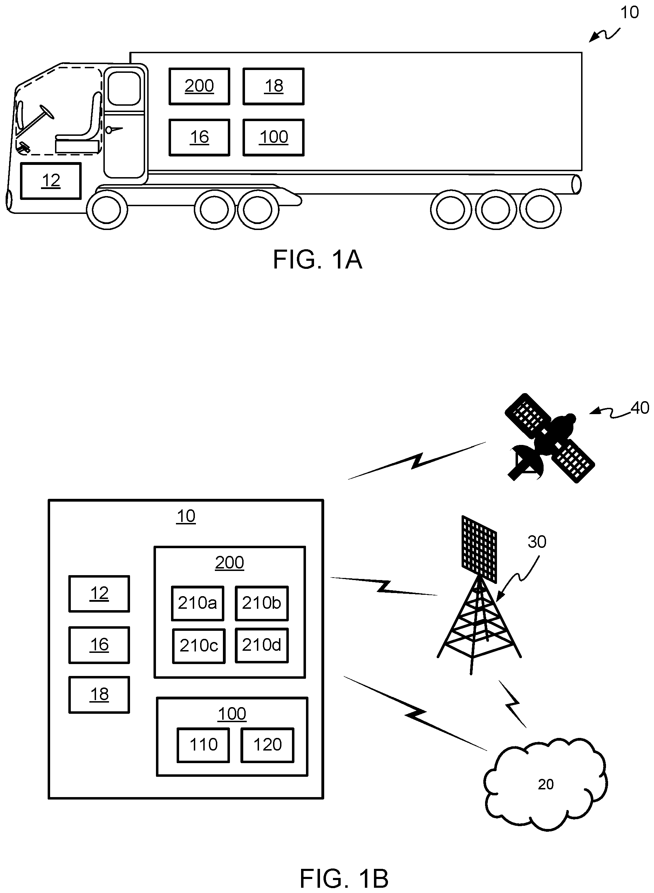

**FIG. 1A** is an exemplary schematic side view of a heavy-duty vehicle **10** (hereinafter referred to vehicle **10** for reasons of brevity). This particular vehicle **10** comprises a tractor unit **10a** which is arranged to tow a trailer unit **10b.** In other examples, other heavy-duty vehicles may be employed, e.g., trucks, buses, and construction equipment. Although not explicitly visualized in **FIG. 1A**, the skilled person will appreciate that the vehicle **10** comprises all necessary vehicle units and associated functionality such that it may operate as the skilled person would expect of a vehicle **10**, such as a powertrain, chassis, and various control systems. Emphasis in the present disclosure is rather directed at pre-charge control of the vehicle **10**, and therefore functionality and features related this will be the focus of the present disclosure. However, the vehicle **10** comprises one or more propulsion sources **12**. The propulsion source **12** may be any suitable propulsion source **12** exemplified by, but not limited to, one or more or a combination of an electrical motor, a combustion engine such as a diesel, gas or gasoline powered engine. The vehicle **10** further comprises an energy source **200** suitable for providing energy for the propulsion source **12**. That is to say, if the propulsion source **12** is an electrical motor, a suitable energy source **200** would be a battery or a fuel cell. The vehicle **10** further comprises sensor circuitry **16** arranged to detect, measure, sense or otherwise obtain data relevant for operation of the vehicle **10**. The data relevant for operation of the vehicle **10** may be exemplified by, but not limited to, one or more of a speed of the vehicle **10**, a weight of the vehicle **10**, an inclination of the vehicle **10**, a status (state of charge, fuel level etc.) of the energy source **200** of the vehicle **10**, a presence of road users in a vicinity of the vehicle **10**, a current speed limit of a current road travelled by the vehicle **10** etc. Advantageously, the vehicle **10** further comprises communications circuitry **18** configured for communication with, to the vehicle **10**, external devices. The vehicle **10** further comprises a computer system **100**, the computer system **100** will be further explained in following sections.

Advantageously, a vehicle **10** according to the present disclosure is an, at least partly, electrically propelled vehicle. To this end, the vehicle **10** of the present disclosure comprise at least one energy source **200** is the form of an electrical energy source. In **FIG**. **1B**, a block diagram of the vehicle 10 is shown. The vehicle energy source **200** comprises at least two battery packs **210a**, **210b**, **210c**, **210d**. In **FIG**. **1B****,** the vehicle energy source **200** is shown comprising four battery packs **210a**, **210b**, **210c**, **210d**. However, this is for illustrative purposes, and the energy source **200** may comprise any number of battery packs **210a**, **210b**, **210c**, **210d**. The battery packs **210a**, **210b**, **210c**, **210d** may be connected in series, in parallel or a combination of series or parallel connections in order to provide a rated voltage an capacity from the energy source **200.** For the present disclosure, it is assumed that the at least two battery packs **210a**, **210b**, **210c**, **210d** are connected in parallel. In some examples, a voltage of the energy source is approximately 800 V.

The vehicle **10** may communicate with a cloud server **20** directly, via the communications circuitry **18**, or via a communications interface, via the communications circuitry **18**, such as a cellular communications interface exemplified by a radio base station **30** in **FIG. 1B**. The cloud server **20** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface is advantageously a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The vehicle **10** may further be operatively connected to a Global Navigation Satellite System (GNSS) **40**, via the communications circuitry **18**, exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10** may be configured to utilize data obtain from the GNSS **40** to determine a geographical location of the vehicle **10**.

The computer system **100** of the vehicle **10** is advantageously operatively connected to the communications circuitry **18**, the sensor circuitry **16**, the energy source **200** and/or the propulsion source **12** of the vehicle **10**. The computer system **100** comprises processing circuitry **110**. The computer system **100** may comprise a storage device **120**, advantageously a non-volatile storage device such as hard disk drives (HDDs), solid-state drives (SSDs) etc. In some examples, the storage device **120** is operatively connected to the computer system **100**.

The energy source **200** is advantageously configured to provide energy to, at least, the propulsion source **12** of the vehicle **10**. Additionally, or alternatively, the energy source **200** may be configured to provide energy to other parts or components of the vehicle **10** such as, but not limited to, vehicle electronics, climate control of the vehicle **10**, safety functions of the vehicle etc. Regardless of the load, it may be advantageous to control the connection of the energy source **200** to the load in order to reduce inrush current flowing from the energy source **200** into the load. In the context of electrical vehicles, pre-charging may be interpreted as slowly increasing a voltage of a traction voltage bus of the vehicle **10**. It should be mentioned that the traction voltage bus of a vehicle **10** generally presents an, at least partly, capacitive load that may cause high inrush currents if proper pre-charge of the traction voltage bus is omitted. The voltage of the traction voltage bus is slowly increased until it reaches a threshold voltage. Generally, the threshold voltage correspond to, or is similar to, a voltage of the energy source **200**. When the voltage of the traction bus reaches the voltage threshold, pre-charging is completed and normal operation of the vehicle may commence.

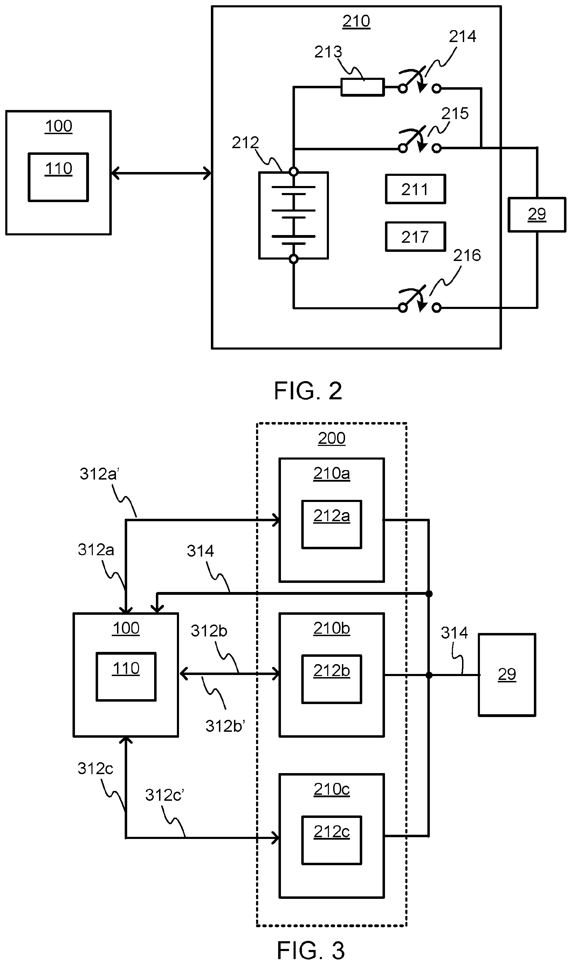

In **FIG. 2**, a schematic view of a battery pack **210** connected to a generic load **29** and the computer system **100** is shown. The load **29** advantageously comprises the traction voltage bus of the vehicle **10**. The battery pack **210** comprises one or more battery cells **212** connected in series and/or in parallel in order to provide a configured voltage and capacitance of the battery pack **210**. The battery back **210** advantageously comprises first switch circuitry **215** arranged to connect a first pole of the one or more battery cells **212** to the load **29**. The battery pack **210** advantageously comprises a pre-charge load **213** operatively connected between the one or more battery cells **212** and the load **29**. The pre-charge load **213** is configured to limit a current from the one or more battery cells **212** during pre-charge. The pre-charge load **213** may be any suitable circuitry configured to limit the current from the one or more battery cells **213** such a resistor. The battery back **210** advantageously comprises second switch circuitry **214** arranged to selectively close an electric circuit between the one or more battery cells **212**, the pre-charge load **213** and the load **29**. The battery back **210** advantageously comprises third switch circuitry 216 arranged to connect a second pole of the one or more battery cells **212** to the load **29**.

The battery back **210** advantageously comprises a battery pack processing circuitry **211**. The battery pack processing circuitry **211** may be configured to control operation of the battery pack **210**. The battery pack **210** may further comprise one or more sensor circuitry **217** configured to detect, measure, sense or otherwise obtain, operational data relating to the battery pack **210**. Operational data relating to the battery pack **210** may be exemplified by, but should not be considered limited to, a voltage of one or more of the battery cells **212**, a status of the switch circuitries **214**, **215**, **216**, a voltage of the load **29**, a current through the pre-charge load **213**, a current from the battery cells **212** (and thereby a current to the battery cells **212** in case of e.g. charging) etc.

Generally, during pre-charge, the processing circuitry **110** of the computer system **100** may instruct the battery pack processing circuitry **211** to close the second switch circuitry **214** and, if present, the third switch circuitry **216**. This will cause the battery back **210** to pre-charge the load **29**. The processing circuitry **110** of the computer system **100** generally monitors a voltage of the load **29** and, as the voltage of the load **29** reaches the threshold, the processing circuitry **110** of the computer system **100** may instruct the battery pack processing circuitry **211** to open the second switch circuitry **214** and close the first switch circuitry **215**, whereby the battery pack **210** is operational to provide a rated current to the load **29**. In some examples, it may be advantageous to close the first switch circuitry **215** prior to opening the second switch circuitry **214** in order to keep a voltage across the load **29** stable until the mechanical movement (arcing potential) of the first switch **215** is completed.

Pre-charging as described above is comparably slow. It may take more than 1 s to pre-charge a load **29** from a single battery pack **210**. Further to this, if only one battery back **210** is utilized, the pre-charge load **213** of that battery back **210** will have to be dimensioned to handle sufficiently high currents and/or energy in order to keep pre-charge time low. This will result in a costly and physically large pre-charge load. It may be possible to address these shortcomings by connecting more than one battery pack **210** to the load **29** during pre-charge. This will potentially double the pre-charge current, or allow a current handling and/or energy handling of the pre-charge loads **213** to be reduced thereby reducing a cost and size of the pre-charge load **213** (and effectively the battery pack **210**).

However, the inventor behind the present disclosure have, through inventive thinking and challenging of technical prejudices related to pre-charge, realized that there is further room for improvement. Pre-charge with more than one battery pack may function sufficiently if a voltage of both battery packs is the same. If one battery pack has a voltage that is lower than another battery pack, the battery pack having the higher voltage will, when a voltage of the load **29** reaches or exceeds the voltage of the battery pack having the lower voltage, charge the battery pack having the lower voltage. This is undesirable as this may actually prolong the pre-charge or completely inhibit the completion of the pre-charge. The inventor have realized that it may very well be, that although two battery packs exhibit similar voltages when unloaded, their respective voltages may very well change differently when they are loaded. However, also unloaded voltage differences between two battery packs are common and may be caused by e.g. replacement of one battery pack, self-discharge, mechanical and/or chemical faults, certain charging functions leading to unbalanced packs etc. To this end, it is beneficial to monitor a voltage difference between each of the battery packs and a load voltage during pre-charge. If the voltage of a battery pack is below, or at, the voltage of the load **29**, pre-charging by that battery pack is advantageously discontinued.

In **FIG. 3** an exemplary view of a computer system **100** is shown. In **FIG.** 3, the computer system **100** is connected to a first battery pack **210a**, a second battery pack **210b**, a third battery pack **210c** and a load **29**. The processing circuitry **110** of the computer system **100** is configured to control, or cause control, of pre-charge of each of the battery packs **210a**, **210b**, **210c**. The processing circuitry **110** may be configured to obtain a load voltage **314** indicating a voltage of the load **29**. The processing circuitry **110** may be configured to obtain a first battery pack voltage **312a** indicating a voltage of the one or more battery cells **212a** of the first battery pack **210a**. Advantageously, the first battery pack voltage **312a** indicates a loaded voltage of the one or more battery cells **212a** of the first battery pack **210a**. Additionally, or alternatively, the processing circuitry **110** may be configured to obtain a further first battery pack voltage **312a'** indicating an open cell voltage, i.e. an unloaded voltage, of the one or more battery cells **212a** of the first battery pack **210a**. The processing circuitry **110** may be configured to obtain a second battery pack voltage **312b** indicating a voltage of the one or more battery cells **212b** of the second battery pack **210a**. Advantageously, the second battery pack voltage **312b** indicates a loaded voltage of the one or more battery cells **212b** of the second battery pack **210b**. Additionally, or alternatively, the processing circuitry **110** may be configured to obtain a further second battery pack voltage **312b'** indicating an open cell voltage, i.e. an unloaded voltage, of the one or more battery cells **212b** of the second battery pack **210b**. The processing circuitry **110** may be configured to obtain a third battery pack voltage **312c** indicating a voltage of the one or more battery cells **212c** of the third battery pack **210c**. Advantageously, the third battery pack voltage **312c** indicates a loaded voltage of the one or more battery cells **212c** of the third battery pack **210c**. Additionally, or alternatively, the processing circuitry **110** may be configured to obtain a further third battery pack voltage **312c'** indicating an open cell voltage, i.e. an unloaded voltage, of the one or more battery cells **212c** of the third battery pack **210c**. The battery pack voltages **312a**, **312a'**, **312b**, **312b'**, **312c**, **312c'** may be provided by the respective battery pack processing circuitry (not shown in FIG. 3). Additionally, or alternatively, the processing circuitry **100** may be configured to obtain the battery pack voltages **312a**, **312a'**, **312b**, **312b'**, **312c**, **312c'** directly from e.g. sensor circuitry **16** of the vehicle **10** or respective sensor circuitry (not shown in **FIG. 3****)** of the battery packs **210a**, **210b**, **210c**.

Assuming that pre-charge is to be performed with two battery packs **210a**, **210b**, **210c**, optionally the processing circuitry **110** may be configured to compare the obtained voltages **312a**, **312a'**, **312b**, **312b'**, **312c**, **312c'** and select the two battery packs **210a**, **210b**, **210c** having the most similar open cell voltages **312a'**, **312b'**, **312c'** and/or loaded cell voltages **312a**, **312b**, **312c**. The processing circuitry **110** may be configured to cause the selected two battery packs **210a**, **210b**, **210c** to commence pre-charge. Alternatively, the processing circuitry **110** may be configured to control the respective switches (not shown in **FIG. 3****)** to start pre-charge. During the pre-charge, the processing circuitry **110** may monitor the battery pack voltages **312a**, **312b**, **312c** and compare these to the load voltage **314**. If one of the battery pack voltages **312a**, **312b**, **312c** is at or below the load voltage **314**, this indicate that the associated battery pack **210a**, **210b**, **210c** is not contributing to pre-charging of the load **29**. In order to decrease the pre-charge time and avoid charging the battery pack **210a**, **210b**, **210c** with battery pack voltages **312a**, **312b**, **312c** at or below the load voltage **314**, the processing circuitry **100** may be configured to control, or cause control of the battery pack **210a**, **210b**, **210c** with battery pack voltage **312a**, **312b**, **312c** at or below the load voltage **314** to stop (discontinue, halt, interrupt, abstain from) pre-charging. Optionally, the processing circuit **100** may, responsive to controlling (or causing control of) one of the battery packs **210a**, **210b**, **210c** to stop pre-charging, control (or cause control of), a further battery pack **210a**, **210b**, **210c** to pre-charge the load **29**.

By the brief example provided above, a pre-charge methodology is provided that reduces a risk of pre-charge current being spent on charging battery packs **210a**, **210b**, **210c** rather than the load **29**. However, the inventor behind the present disclosure have realized that there are even further opportunities for improvement. By distributing the control of the pre-charge to the battery packs **210a**, **210b**, **210c**, the pre-charge may be interrupted faster and less communication is required from the battery packs **210a**, **210b**, **210c.** Communication networks in vehicles, e.g. CAN bus, are generally slow and communication of voltages and controls across these networks will, from a pre-charge perspective, take significant time. To this end, a supportive pre-charge mode is introduced.

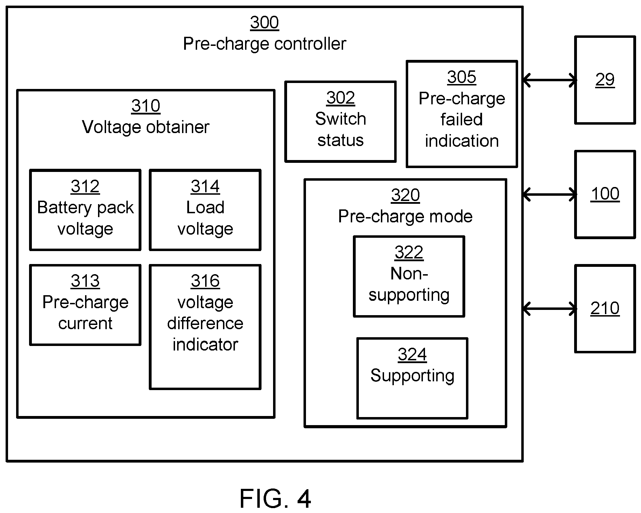

In **FIG. 4** a schematic view of a pre-charge controller **300** according to some examples is shown. The pre-charge controller **300** and all of its functionality and features may be part of the computer system **100** and/or comprised in a vehicle **10**. In an advantageous example, the pre-charge controller **300** is an, at least partly, computer implemented functionality. Advantageously, the computer implemented functionality of the pre-charge controller **300** is performed by a suitable processing circuitry **110**, **211**, advantageously the battery pack processing circuitry **211**. In examples where the functionality of the pre-charge controller **300** is performed by the battery pack processing circuitry **211**, there is a time benefit compares to having the functionality being performed remote from the battery pack **200**. As mentioned, sending communication over a vehicle communication network back-and-forth typically takes longer than measuring a voltage and immediately compare it to a voltage target/limit directly at the battery pack processing circuitry **211**. This is due to the measuring and logical decisions need to be performed in either case (remote or local functionality), and for the remote case, time is also needed for comparably slow two-way CAN communication.

In systems, arrangement or devices comprising more than one battery pack **210**, one pre-charge controller **300** is advantageously associated with each battery pack **210**. In **FIG. 4**, the pre-charge controller **300** is shown operatively connected to the load **29**, the computer system **100** and the battery pack **210**. However, this is for illustrative purposes, and the skilled person will appreciate that this should not be considered limiting for the present disclosure.

The pre-charge controller **300** comprises a switch status **302** of the switch circuitry **214**, **21**5**, 216** of the associated battery pack **210**. The pre-charge controller 300 is configured to control the switch status **302** of the respective switch circuitry **214**, **215**, **216** during pre-charge, based on a pre-charge mode **320**. The pre-charge mode **320** may be either a non-supportive pre-charge mode **322** or the supportive pre-charge mode **324**. The pre-charge mode **320** is advantageously set by e.g. processing circuitry **110** of the computer system **100.** Generally, if no specific pre-charge mode **320** is specified, the pre-charge controller **300** may operate in the non-supportive pre-charge mode **322.**

At the non-supportive pre-charge mode **322,** the pre-charge controller **300** controls the switch status **302** to provide pre-charge to the load **29.** The non-supportive pre-charge **322** may be continued until an indication to stop pre-charging is obtained from e.g. processing circuitry **110** of the computer system **100.** When such an indication is obtained, the pre-charge controller **300** may be configured to control the switch status **302** to disconnect the pre-charge load **213** from the load **29** and close the first switch circuitry **215.**

At the supportive pre-charge mode **324,** the pre-charge controller **300** controls the switch status **302** to provide pre-charge to the load **29.** Also the supportive pre-charge **324** may be continued until an indication to stop pre-charging is obtained from e.g. processing circuitry **110** of the computer system **100.** When such an indication is obtained, the pre-charge controller **300** may be configured to control the switch status **302** to disconnect the pre-charge load **213** from the load **29** and close the first switch circuitry **215.** However, at the supportive pre-charge mode **324** the pre-charge controller **300** will also stop the pre-charge if it is determined that associated battery pack **210** does not contribute to the pre-charging of the load **29.**

To this end, the pre-charge controller **300** comprises a voltage obtainer **310.** The voltage obtainer **310** may be configured to obtain a battery pack voltage **312.** The battery pack voltage **312** may be obtained by any suitable means, advantageously by sensor circuitry **217** of the associated battery pack **210.** The voltage obtainer **310** may be configured to obtain a load voltage **314.** The load pack voltage **314** may be obtained by any suitable means, advantageously by sensor circuitry **217** of the associated battery pack **210.** During pre-charge, the load voltage **314** and the battery pack voltage **312** are at opposite potentials of the pre-charge load **213.** This means, that (assuming the pre-charge load **213** is between a positive terminal of the one or more battery cells **212** and the load **29),** if the battery pack voltage **312** is higher than the load voltage **314,** current is flowing from the one or more battery cells **212** into the load **29,** i.e. the battery pack **210** is contributing to pre-charging the load **29.** Further (still assuming the pre-charge load **213** is between a positive terminal of the one or more battery cells **212** and the load **29),** if the battery pack voltage **312** is lower than the load voltage **314,** current is flowing from the load **29** into the one or more battery cells **212,** i.e. the battery pack **212** is not contributing to pre-charging the load **29,** but is rather forming part of the load being pre-charged. Therefore, the voltage obtainer **310** may be configured to provide a voltage difference indicator **316** that indicate if the battery pack **210** is contributing to the pre-charging the load **29** or not. Alternatively, or additionally, the voltage obtainer **310** may be configured to obtain a pre-charge current **313.** In some examples, the voltage obtainer **310** may be configured to determine the voltage difference indicator **316** based on a direction (i.e. positive or negative) of the pre-charge current **313.** Further, if the current is substantially zero, this also indicate that the battery pack **210** is not contributing to pre-charging the load **29.**

During pre-charge at the supportive pre-charge mode **320,** the pre-charge controller **300** may be configured to abort the pre-charge if the voltage difference indicator **316** indicate that the battery pack **210** is not contributing to the pre-charge. That is to say, is the voltage difference indicator **316** indicates that the battery pack voltage **312** is at or below the load voltage **314.** Optionally, if the pre-charge controller **300** aborts the pre-charge of the load **29,** the pre-charge controller **300** may be configured to provide a supporting pre-charge failed indication **305,** or pre-charge failed indication **305** for short, to processing circuitry **110** of the computer system **100.** This beneficial as it informs the computer system **100** of the failed pre-charge and allows the computer system **100** to control further battery packs to provide pre-charge to the load **29,** optionally in the supporting pre-charge mode **324.**

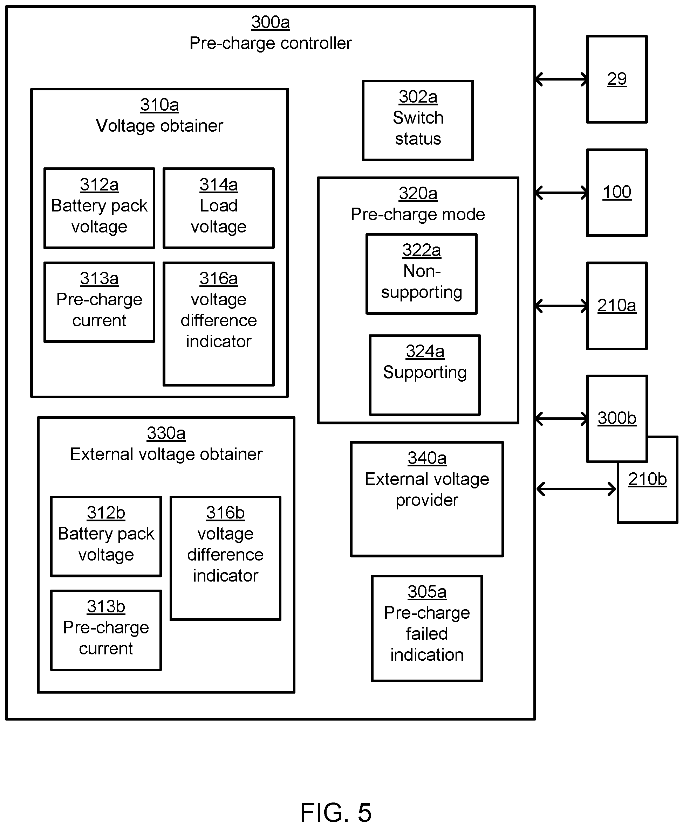

With reference to **FIG. 5**, another schematic view of a pre-charge controller **300a** according to some examples is shown. The pre-charge controller **300a** shown in **FIG. 5** may be configured with all functionality and feature of the pre-charge controller **300** shown in **FIG. 4****.** For reasons of brevity, these functions and features will not be repeated for the pre-charge controller **300a** of **FIG. 5****.** The pre-charge controller **300a** shown in **FIG. 5** comprises an external voltage obtainer **330a.** The external voltage obtainer **330a** may be configured to obtain a second battery pack voltage **312b** indicating a voltage of a second, external, battery pack **210b.** The second battery pack voltage **312b** may be obtained by any suitable means, advantageously by a second pre-charge controller **300b** associated with the second battery pack **210b.** Alternatively, or additionally, the second battery pack voltage **312b** may be obtained from the computer system **100** and or directly from sensors circuitry of the second battery pack **210b.** Alternatively, or additionally, the external voltage obtainer **330a** may be configured to obtain a pre-charge current **313b** of the second battery pack **210b.** The pre-charge current **313b** of the second battery pack **210b** may be obtained correspondingly as the second battery pack voltage **312b.** Correspondingly to the voltage difference indicator **316a** provided by the voltage obtainer **310a,** the external voltage obtainer **330a** may be configured to provide a second voltage difference indicator **316b** that indicate if the second battery pack **210b** is contributing to the pre-charging the load **29** or not.

During pre-charge at the supportive pre-charge mode **320,** the pre-charge controller **300a** may be configured to abort the pre-charge if the second voltage difference indicator **316b** indicate that the second battery pack **210b** is not contributing to the pre-charge. In other words, if the second pre-charge controller **300b** determines that the voltage of the second battery pack **210b** is at or below a load voltage sensed by the second pre-charge controller **300b,** the second battery pack **210b** is likely being charged by the first battery pack **210a.** Assuming that the second pre-charge controller **300b** is configured to provide pre-charge in the non-supporting mode, the second pre-charge controller **300b** is not permitted to abort pre-charging of the load **29.** However, in the present example, the first pre-charge controller **300b** may respond to the voltage difference of the second pre-charge controller **300b** and abort pre-charge from the first battery pack **210a** such that only the second pre-charge controller **300b** provides pre-charge to the load **29** (assuming no further contributers to pre-charge are available). This reduces a risk that the present battery pack **210a** is charging other battery packs **210b** together with the load **29.**

As in **FIG. 3****,** optionally, if the pre-charge controller **300** of **FIG. 5** aborts the pre-charge of the load **29** (for whatever reason), the pre-charge controller **300** may be configured to provide a supporting pre-charge failed indication **305** to processing circuitry **110** of the computer system **100.** This beneficial as it informs the computer system **100** of the failed pre-charge and allows the computer system **100** to control further battery packs to provide pre-charge to the load **29,** optionally in the supporting pre-charge mode **324.**

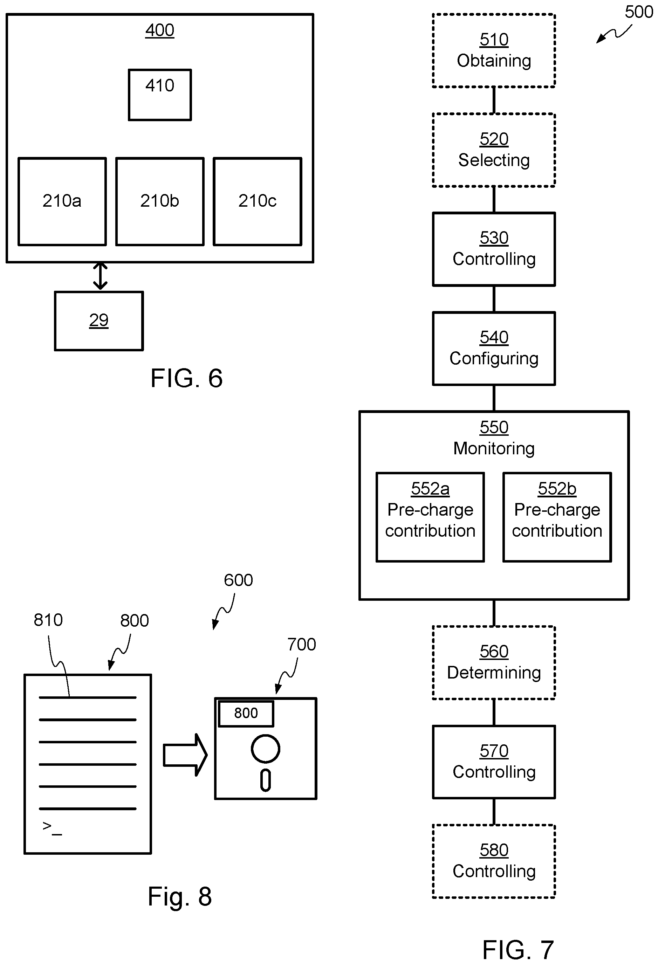

In **FIG. 6** a schematic view of a battery system **400** is shown. The battery system **400** comprises at least a first battery pack **210a,** a second battery pack **210b** and processing circuitry **410.** In **FIG. 6****,** the battery system **400** further comprises an optional third battery pack **210c** and may in other examples comprise many more than three battery packs. The processing circuitry **410** may be dedicated battery system processing circuitry or processing circuitry forming part of the processing circuitry **110** of the computer system **100.** At least one of the battery packs **210a, 210b, 210c** is configurable to provide pre-charge in the supporting pre-charge mode **324** as presented herein. In the following, it is assumed that at least the first battery pack **210a** and the optional third battery pack **210c** are configurable to provide pre-charge in the supporting pre-charge mode **324.** The processing circuitry **410** is advantageously configured to control the first battery pack **210a** and the second battery pack **210b** to provide pre-charge to the load **29.** The processing circuitry **410** is advantageously further configured to configure the first battery pack **210a** to provide pre-charge in the supporting pre-charge mode **324.**

In some examples, the processing circuitry **410** is further configured to monitor the second voltage difference indicator **316b** as disclosed herein and provide the second voltage difference indicator **316b** to the first battery pack 210a.

In some examples, responsive to obtaining a supporting pre-charge failed indication **305** from the first battery pack **210a,** the processing circuitry **410** may be configured to control the third battery pack **210c** to provide pre-charge to the load **29.** Optionally, the processing circuitry **410** may further be conjured to configure the third battery pack **210c** to provide pre-charge in the supporting pre-charge mode **324.**

As mentioned above, the pre-charge is advantageously aborted if the voltage difference indicator **316** indicate that the battery pack **210** is not contributing to the pre-charge. However, for the present disclosure, this may be interpreted as the battery pack **210** is not significantly contributing to the pre-charge of the load **29.** That is to say, if the voltage difference indicator **316** indicates that the battery pack voltage **312** is below a configurable threshold, the pre-charge may be aborted. The threshold may be configured with sufficient margin such that if the battery pack **210** is contributing to pre-charge of the load **29,** but not contributing as much as expected, the pre-charge may be aborted.

In **FIG. 7****,** a schematic view of a method **500** is shown. The method **500** is advantageously a computer implemented method **500.** The method **500,** or at least part of the method **500,** is advantageously performed by processing circuitry **110** of the computer system **100.** That is to say, the processing circuitry **110** may be configured to perform, in part or in full, the method **500,** configured to cause, in part or in full, performance of the method **500** or a combination thereof. The method **500** will be briefly introduced with reference to **FIG. 7****,** but the skilled person will appreciate that the method **500** may very well be extended to comprise any further feature, functionality or example presented herein.

The method **500** comprises controlling **530** a first battery pack **210a** a second battery pack **210b** to provide pre-charge to a load **29.** The battery packs **210a, 210b** are advantageously **210a, 210b** battery packs according to the present disclosure, but may be any suitable battery pack configurable to provide pre-charge to the load **29.** The method **500** further comprises configuring **540** the first battery pack **210a** to provide pre-charge in the supporting pre-charge mode **324.** It should be mentioned that, if the first battery pack **210a** is battery pack according to the present disclosure, the first battery pack **210a** may indeed be configured to provide pre-charge in the supporting pre-charge mode **324B.** However, if the battery pack is a general battery pack, the supporting pre-charge mode may be configured and control at a layer above the battery pack itself as described herein. The method **500** further comprises, during pre-charge in the supporting pre-charge mode **324,** monitoring **552a** of a pre-charge contribution of the first battery pack **210a.** The monitoring **552a** of the pre-charge contribution of the first battery pack **210a** may be provided according to any feature, function or example presented herein. Advantageously, monitoring **552a** of the pre-charge contribution of the first battery pack **210a** is based a first voltage difference indicator **316a** indicating a difference between a load voltage **314** and a first battery pack voltage **312a.** The method **500** further comprises, responsive to determining that the first battery pack **210a** is not contributing to pre-charging of the load **29** (e.g. the voltage difference indicator **316a** indicating that first battery pack voltage **312a** is at or below the load voltage **314),** controlling **570** the first battery pack **210a** to discontinue (abort, stop, seize) pre-charge of the load **29.**

In some optional examples of the method **500,** the method **500** further comprises determining **560** the first voltage difference indicator **316a** based on the pre-charge current **313a.** Additionally, or alternatively, the method **500** may comprise determining **560** the first voltage difference indicator **316a** based on the first battery pack voltage **312a** and the load voltage **314.**

In some optional examples of the method **500,** the method **500** further comprises, during pre-charge in the supporting pre-charge mode **324,** monitoring **552b** of a pre-charge contribution of the second battery pack **210b.** The monitoring **552b** of the pre-charge contribution of the second battery pack **210b** may be provided according to any feature, function or example presented herein. Advantageously, the monitoring **552b** of the pre-charge contribution of the second battery pack **210b** may be provided by a second voltage difference indicator **316b** indicating a difference between the load voltage **314** and a second battery pack voltage **312b.** The method **500** further comprises, responsive to the second battery pack **210b** not contributing to pre-charging of the load **29,** controlling **570** the first battery pack **210a** to discontinue (abort, stop, seize) pre-charge of the load **29.** Advantageously, the method **500** comprises, responsive to the second voltage difference indicator **316b** indicating that the second battery pack voltage **312b** is below or at the load voltage **314,** controlling **570** the first battery pack **210a** to discontinue pre-charge of the load **29.**

Optionally, on some examples, the method **500** may comprise, responsive to control of the first battery pack **210a** to discontinue pre-charge of the load **29,** controlling **530** a third battery pack **210c** to provide pre-charge to the load **29,** and configuring **540** the third battery pack **210c** to provide pre-charge in the supporting pre-charge mode **324.** The contribution of the third battery to the pre-charging of the load **29** may be performed as outlined in reference to the first battery pack **210a.** It should be mentioned that, the method **500** (and the other examples provided herein) may very well comprising controlling the second battery pack **210b** to provide pre-charge in the supporting pre-charge mode **324** responsive to aborting supportive pre-charge of the first battery pack **210a.**

Optionally, in some examples, the method **500** further comprises obtaining **510** at least one of an open cell voltage **312'** or a loaded cell voltages **312** of each battery pack **210a, 210b, 210c, 210d** connectable to the load **29.** Advantageously, the battery packs **210a, 210b, 210c, 210d** are part of a battery system **200** comprising more than two battery packs **210a, 210b, 210c, 210d.** The method **500** further comprises selecting **520,** the first battery pack **210a** and the second battery pack **210b** from the two or more battery packs **210a, 210b, 210c, 210d** based the open cell voltages **312a', 312b', 312c', 312d'** and/or the loaded cell voltages **312a, 312b, 312c, 312d** of the battery packs **210a, 210b, 210c, 210d.** Advantageously, the method 500 comprises selecting the first battery pack **210a** and the second battery pack **210b** by selecting a pair of battery packs **210a, 210b, 210c, 210d** of the two or more battery packs **210a, 210b, 210c, 210d** having the lowest difference in open cell voltages **312a', 312b', 312c', 312d'** and/or loaded cell voltages **312a, 312b, 312c, 312d** of each pair of battery packs **210a, 210b, 210c, 210d** of the two or more battery packs **210a, 210b, 210c, 210d.**

In **FIG. 8** a computer program product **600** is shown. The computer program product **600** comprises a computer program **800** and a non-transitory computer readable medium **700.** The computer program **800** is advantageously stored on the computer readable medium **700.** The computer readable medium **700** is, in **FIG. 8****,** exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **800** comprises instruction **810** e.g. program instruction, software code, that, when executed by processing circuitry cause the processing circuitry to perform the method **500** described herein with reference to **FIG. 7****.**

It should be mentioned that the teachings of the present disclosure are equally applicable to other loads, and implementations in other fields than transportation and vehicles. Any system, device or arrangement wherein reduction of inrush currents and/or a controlled pre-charge is beneficial, may benefit from the present disclosure. Such system, device or arrangement may reside in the field of industrial applications or marine vessels, such as water crafts, motorboats, work boats, sport vessels, boats, ships, among other vessel types.

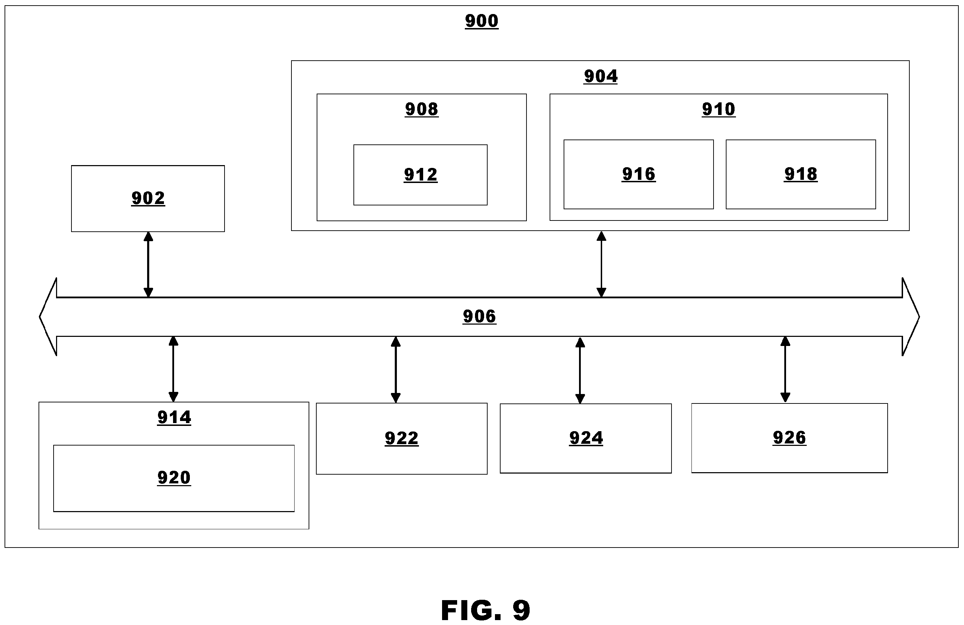

**FIG. 9** is a schematic diagram of a computer system **900** for implementing examples disclosed herein. The computer system **900** shown in **FIG. 9** may be the computer system **100** previously presented. The computer system **900** is adapted to execute instructions from a computer-readable medium to perform these and/or any of the functions or processing described herein. The computer system **900** may be connected (e.g., networked) to other machines in a LAN, an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units), a memory **904,** and a system bus **906.** The processing circuitry **902** may be the processing circuitry **110** of the previously presented computer system **100.** The memory **904** may be the storage device **120** of the previously presented computer system **100.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902.** In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902.** The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device
interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system **100** comprising processing circuitry **110** configured to: control a first battery pack **210a** and a second battery pack **210b** to provide pre-charge to a load **29,** configure the first battery pack **210a** to provide pre-charge in a supporting pre-charge mode **324,** and during pre-charge in the supporting pre-charge mode **324,** monitor a first voltage difference indicator **316a** indicating a difference between a load voltage **314** and a first battery pack voltage **312a,** and responsive to the first voltage difference indicator **316a** indicating that first battery pack voltage **312a** is at or below the load voltage **314,** control the first battery pack **210a** to discontinue pre-charge of the load **29.**

Example 2. The computer system **100** of example 1, wherein the processing circuitry **110** is further configured to: monitor a pre-charge current **313a** between the first battery pack **210a** and the load **29,** and determine the first voltage difference indicator **316a** based on the pre-charge current **313a.**

Example 3. The computer system **100** of example 1 or 2, wherein the processing circuitry **110** is further configured to: monitor the first battery pack voltage **312a** and the load voltage **314,** and determine the first voltage difference indicator **316a** based on the first battery pack voltage **312a** and the load voltage **314.**

Example 4. The computer system 100 of any one of examples 1 to 3, wherein the processing circuitry **110** is further configured to: during pre-charge in the supporting pre-charge mode **324,** monitor a second voltage difference indicator **316b** indicating a difference between the load voltage **314** and a second battery pack voltage **312b,** and responsive to the second voltage difference indicator **316b** indicating that the second battery pack voltage **312b** is at or below the load voltage **314,** control the first battery pack **210a** to discontinue pre-charge of the load **29.**

Example 5. The computer system **100** of any one of examples 1 to 4, wherein the processing circuitry **110** is further configured to: responsive to control of the first battery pack **210a** to discontinue pre-charge of the load **29,** control a third battery pack **210c** to provide pre-charge to the load **29,** and configure the third battery pack **210c** to provide pre-charge in the supporting pre-charge mode **324.**

Example 6. The computer system **100** of example 5, wherein the processing circuitry **110** is further configured to: during pre-charge in the supporting pre-charge mode **324,** monitor a third voltage difference indicator **316c** indicating a difference between a voltage of the load **29** and a third battery pack voltage **312c,** and responsive to the third voltage difference indicator **316c** indicating that the third battery pack voltage **312c** is at or below the voltage of the load **29,** control the third battery pack **210c** to discontinue pre-charge of the load **29.**

Example 7. The computer system **100** of any one of examples 1 to 6, wherein the processing circuitry **110** is further configured to: obtain at least one of an open cell voltage **312'** or a loaded cell voltages **312** of each battery pack **210a, 210b, 210c, 210d** of a battery system **200** comprising more than two battery packs **210a, 210b, 210c, 210d,** and select the first battery pack **210a** and the second battery pack **210b** from the two or more battery packs **210a, 210b, 210c, 210d** of the battery system **200** based the open cell voltages **210a, 210b, 210c, 210d** and/or the loaded cell voltages **210a, 210b, 210c, 210d** of the battery packs **210a, 210b, 210c, 210d** of the battery system **200.**

Example 8. The computer system **100** of example 7, wherein the processing circuitry **110** is further configured to: select the first battery pack **210a** and the second battery pack **210b** by selecting a pair of battery packs **210a, 210b, 210c, 210d** of the two or more battery packs **210a, 210b, 210c, 210d** of the battery system **200** having the lowest difference in open cell voltages **312a', 312b', 312c', 312d'** and/or loaded cell voltages **312a, 312b, 312c, 312d** of each pair of battery packs **210a, 210b, 210c, 210d** of the two or more battery packs **210a, 210b, 210c, 210d** of the battery system **200.**

Example 9. The computer system **100** of example 1, wherein the processing circuitry **110** is further configured to: monitor a pre-charge current **313a** between the first battery pack **210a** and the load **29,** and determine the first voltage difference indicator **316a** based on the pre-charge current **313a;** monitor the first battery pack voltage **312a** and the load voltage **314,** and determine the first voltage difference indicator **316a** based on the first battery pack voltage **312a** and the load voltage **314;** during pre-charge in the supporting pre-charge mode **324,** monitor a second voltage difference indicator **316b** indicating a difference between the load voltage **314** and a second battery pack voltage **312b,** and responsive to the second voltage difference indicator **316b** indicating that the second battery pack voltage **312b** is at or below the load voltage **314,** control the first battery pack **210a** to discontinue pre-charge of the load **29** and responsive to control of the first battery pack **210a** to discontinue pre-charge of the load **29,** control a third battery pack **210c** to provide pre-charge to the load **29,** and configure the third battery pack **210c** to provide pre-charge in the supporting pre-charge mode **324;** during pre-charge in the supporting pre-charge mode **324,** monitor a third voltage difference indicator **316c** indicating a difference between a voltage of the load 29 and a third battery pack voltage **312c,** and responsive to the third voltage difference indicator **316c** indicating that the third battery pack voltage **312c** is at or below the voltage of the load **29,** control the third battery pack **210c** to discontinue pre-charge of the load **29;** obtain at least one of an open cell voltage **312'** or a loaded cell voltages **312** of each battery pack **210a, 210b, 210c, 210d** of a battery system **200** comprising more than two battery packs **210a, 210b, 210c, 210d,** and select the first battery pack **210a** and the second battery pack **210b** from the two or more battery packs **210a, 210b, 210c, 210d** of the battery system **200** based the open cell voltages **210a, 210b, 210c, 210d** and/or the loaded cell voltages **210a, 210b, 210c, 210d** of the battery packs **210a, 210b, 210c, 210d** of the battery system **200;** and select the first battery pack **210a** and the second battery pack **210b** by selecting a pair of battery packs **210a, 210b, 210c, 210d** of the two or more battery packs **210a, 210b, 210c, 210d** of the battery system **200** having the lowest difference in open cell voltages **312a', 312b', 312c', 312d'** and/or loaded cell voltages **312a, 312b, 312c, 312d** of each pair of battery packs **210a, 210b, 210c, 210d** of the two or more battery packs **210a, 210b, 210c, 210d** of the battery system **200.**

Example 10. A computer implemented method **500** comprising: controlling **530,** by processing circuitry **110** of a computer system **100,** a first battery pack **210a** and a second battery pack **210b** to provide pre-charge to a load **29,** configuring **540,** by the processing circuitry **110** of the computer system **100,** the first battery pack **210a** to provide pre-charge in a supporting pre-charge mode **324,** and during pre-charge in the supporting pre-charge mode **324,** monitoring **552a,** by the processing circuitry **110** of the computer system **100,** a first voltage difference indicator **316a** indicating a difference between a load voltage **314** and a first battery pack voltage **312a,** and responsive to the first voltage difference indicator **316a** indicating that first battery pack voltage **312a** is at or below the load voltage **314,** controlling **570,** by the processing circuitry **110** of the computer system **100,** the first battery pack **210a** to discontinue pre-charge of the load **29.**

Example 11. The computer implemented method **500** of example **10** further comprising: monitoring **552a,** by the processing circuitry **110** of the computer system **100,** a pre-charge current **313a** between the first battery pack **210a** and the load **29,** and determining **560,** by the processing circuitry **110** of the computer system **100,** the first voltage difference indicator **316a** based on the pre-charge current **313a.**

Example 12. The computer implemented method **500** of example 10 or 11 further comprising: monitoring **552a,** by the processing circuitry **110** of the computer system **100,** the first battery pack voltage **312a** and the load voltage **314,** and determining **560,** by the processing circuitry **110** of the computer system **100,** the first voltage difference indicator **316a** based on the first battery pack voltage **312a** and the load voltage **314.**

Example 13. The computer implemented method **500** of any one of examples 10 to 12 further comprising: during pre-charge in the supporting pre-charge mode **324,** monitoring **552b,** by the processing circuitry **110** of the computer system **100,** a second voltage difference indicator **316b** indicating a difference between the load voltage **314** and a second battery pack voltage **312b,** and responsive to the second voltage difference indicator **316b** indicating that the second battery pack voltage **312b** is at or below the load voltage **314,** controlling **570,** by the processing circuitry **110** of the computer system **100,** the first battery pack **210a** to discontinue pre-charge of the load **29.**

Example 14. The computer implemented method **500** of any one of examples 10 to 13 further comprising: responsive to control of the first battery pack **210a** to discontinue pre-charge of the load **29,** controlling **530,** by the processing circuitry **110** of the computer system **100,** a third battery pack **210c** to provide pre-charge to the load **29,** and configuring **540,** by the processing circuitry **110** of the computer system **100,** the third battery pack **210c** to provide pre-charge in the supporting pre-charge mode **324.**

Example 15. The computer implemented method **500** of example 14 further comprising: during pre-charge in the supporting pre-charge mode **324,** monitoring, by the processing circuitry **110** of the computer system **100,** a third voltage difference indicator indicating a difference between a voltage of the load **29** and a third battery pack voltage, and responsive to the third voltage difference indicator indicating that the third battery pack voltage **312c** is at or below the voltage of the load **29,** controlling **570,** by the processing circuitry **110** of the computer system **100,** the third battery pack **210c** to discontinue pre-charge of the load **29.**

Example 16. The computer implemented method **500** of any one of examples 10 to 15 further comprising: obtaining **510,** by the processing circuitry **110** of the computer system **100,** at least one of an open cell voltage **312'** or a loaded cell voltages **312** of each battery pack **210a, 210b, 210c, 210d** of a battery system **200** comprising more than two battery packs **210a, 210b, 210c, 210d,** and selecting **520,** by the processing circuitry **110** of the computer system **100,** the first battery pack **210a** and the second battery pack **210b** from the two or more battery packs **210a, 210b, 210c, 210d** of the battery system **200** based the open cell voltages **210a, 210b, 210c, 210d** and/or the loaded cell voltages **210a, 210b, 210c, 210d** of the battery packs **210a, 210b, 210c, 210d** of the battery system **200.**

Example 17. The computer implemented method **500** of example 16 further comprising: selecting **520,** by the processing circuitry **110** of the computer system **100,** the first battery pack **210a** and the second battery pack **210b** by selecting a pair of battery packs **210a, 210b, 210c, 210d** of the two or more battery packs **210a, 210b, 210c, 210d** of the battery system **200** having the lowest difference in open cell voltages **312a', 312b', 312c', 312d'** and/or loaded cell voltages **312a, 312b, 312c, 312d** of each pair of battery packs **210a, 210b, 210c, 210d** of the two or more battery packs **210a, 210b, 210c, 210d** of the battery system **200.**

Example 18. A vehicle **10** comprising a first battery pack **210a,** a second battery pack **210b** and the computer system **100** of any one of examples 1 to 9 operatively connected to the first battery pack **210a** and the second battery pack **210b.**

Example 19. The vehicle **10** of example 18, wherein the first battery pack **210a** and the second battery pack **210b** are propulsion batteries operatively connected to one or more electrical propulsion sources **12** of the vehicle **10.**

Example 20. The vehicle **10** of example 18 or 19, wherein the vehicle **10** is a heavy-duty vehicle.

Example 21. A computer program product **600** comprising program code **810** for performing, when executed by a processing circuitry **110** of a computer system **100,** the computer implemented method **500** of any of examples 10 to 17.

Example 22. A non-transitory computer-readable storage medium **700** comprising instructions **610,** which when executed by a processing circuitry **110** of a computer system **100,** cause the processing circuitry **110** to perform the computer implemented method **500** of any of examples 10 to 17.

Example 23. A battery pack **210** comprising battery pack processing circuitry **211,** one or more battery cells **120** and a pre-charge load **213** selectively connected between the one or more battery cells **120** and a load **29,** wherein the battery pack processing circuitry **211** is configured to: obtain instructions to perform pre-charge of the load **29** in a supporting pre-charge mode **324,** connect the pre-charge load **213** between the one or more battery cells **120** and the load **29,** monitor a first voltage difference indicator **316a** indicating a difference between a load voltage **314** and a battery pack voltage **312,** and responsive to the first voltage difference indicator **316a** indicating that the battery pack voltage **312** is below or at the load voltage **314,** disconnect the pre-charge load **213** from the one or more battery cells **120** and/or the load **29.**

Example 24. The battery pack **210** of example 23, wherein the battery pack processing circuitry **211** is further configured to: responsive to disconnecting the pre-charge load **213** from the one or more battery cells **120** and/or the load **29,** provide a supporting pre-charge failed indication **305** to processing circuitry **410** of a battery system **400.**

Example 25. The battery pack **210** of example 23 or 24, wherein the battery pack processing circuitry **211** is further configured to: obtain a second voltage difference indicator **316b** indicating a difference between the load voltage **314** and a second battery pack voltage **312b** associated with a second battery pack **210b** connected to the load **29,** and responsive to the second voltage difference indicator **316b** indicating that the second battery pack voltage **312b** is at or below the load voltage **314,** disconnect the pre-charge load **213** from the one or more battery cells **120** and/or the load **29.**

Example 26. A battery system **400,** comprising a first battery pack **210a** selectively connected to a load **29,** a second battery pack **210b** selectively connected to the load **29** and processing circuitry **410,** at least the first battery pack **210a** is a battery pack of any one of examples 23 to 25, wherein the processing circuitry **410** is configured to: control the first battery pack **210a** and the second battery pack **210b** to provide pre-charge to the load **29,** and configure the first battery pack **210a** to provide pre-charge in a supporting pre-charge mode **324.**

Example 27. The battery system **400** of example 26, wherein the processing circuitry **410** is further configured to: monitor a second voltage difference indicator **316b** indicating a difference between a load voltage **314** and a second battery pack voltage **312b,** and provide the second voltage difference indicator **316b** to the first battery pack **210a.**

Example 28. The battery system **200** of example 26 or 27, further comprising a third battery pack **210c,** wherein the processing circuitry **210** is further configured to: responsive to obtaining a supporting pre-charge failed **305** indication from the first battery pack **210a,** control the third battery pack **210c** to provide pre-charge to the load **29,** and configure the third battery pack **210c** to provide pre-charge in the supporting pre-charge mode **324.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising processing circuitry (110) configured to:
control a first battery pack (210a) and a second battery pack (210b) to provide pre-charge to a load (29),
configure the first battery pack (210a) to provide pre-charge in a supporting pre-charge mode (324), and
during pre-charge in the supporting pre-charge mode (324), monitor a first voltage difference indicator (316a) indicating a difference between a load voltage (314) and a first battery pack voltage (312a), and
responsive to the first voltage difference indicator (316a) indicating that first battery pack voltage (312a) is at or below the load voltage (314), control the first battery pack (210a) to discontinue pre-charge of the load (29).

2. The computer system (100) of claim 1, wherein the processing circuitry (110) is further configured to:
monitor a pre-charge current (313a) between the first battery pack (210a) and the load (29), and
determine the first voltage difference indicator (316a) based on the pre-charge current (313a).

3. The computer system (100) of claim 1 or 2, wherein the processing circuitry (110) is further configured to:
monitor the first battery pack voltage (312a) and the load voltage (314), and
determine the first voltage difference indicator (316a) based on the first battery pack voltage (312a) and the load voltage (314).

4. The computer system (100) of any one of claims 1 to 3, wherein the processing circuitry (110) is further configured to:
during pre-charge in the supporting pre-charge mode (324), monitor a second voltage difference indicator (316b) indicating a difference between the load voltage (314) and a second battery pack voltage (312b), and
responsive to the second voltage difference indicator (316b) indicating that the second battery pack voltage (312b) is at or below the load voltage (314), control the first battery pack (210a) to discontinue pre-charge of the load (29).

5. The computer system (100) of any one of claims 1 to 4, wherein the processing circuitry (110) is further configured to:
obtain at least one of an open cell voltage (312') or a loaded cell voltages (312) of each battery pack (210a, 210b, 210c, 210d) of a battery system (200) comprising more than two battery packs (210a, 210b, 210c, 210d), and
select the first battery pack (210a) and the second battery pack (210b) by selecting a pair of battery packs (210a, 210b, 210c, 210d) of the two or more battery packs (210a, 210b, 210c, 210d) of the battery system (200) having the lowest difference in open cell voltages (312a', 312b', 312c', 312d') and/or loaded cell voltages (312a, 312b, 312c, 312d) of each pair of battery packs (210a, 210b, 210c, 210d) of the two or more battery packs (210a, 210b, 210c, 210d) of the battery system (200).

6. The computer system (100) of claim 1, wherein the processing circuitry (110) is further configured to: monitor a pre-charge current (313a) between the first battery pack (210a) and the load (29), and determine the first voltage difference indicator (316a) based on the pre-charge current (313a); monitor the first battery pack voltage (312a) and the load voltage (314), and determine the first voltage difference indicator (316a) based on the first battery pack voltage (312a) and the load voltage (314); during pre-charge in the supporting pre-charge mode (324), monitor a second voltage difference indicator (316b) indicating a difference between the load voltage (314) and a second battery pack voltage (312b), and responsive to the second voltage difference indicator (316b) indicating that the second battery pack voltage (312b) is at or below the load voltage (314), control the first battery pack (210a) to discontinue pre-charge of the load (29); and obtain at least one of an open cell voltage (312') or a loaded cell voltages (312) of each battery pack (210a, 210b, 210c, 210d) of a battery system (200) comprising more than two battery packs (210a, 210b, 210c, 210d), and select the first battery pack (210a) and the second battery pack (210b) by selecting a pair of battery packs (210a, 210b, 210c, 210d) of the two or more battery packs (210a, 210b, 210c, 210d) of the battery system (200) having the lowest difference in open cell voltages (312a', 312b', 312c', 312d') and/or loaded cell voltages (312a, 312b, 312c, 312d) of each pair of battery packs (210a, 210b, 210c, 210d) of the two or more battery packs (210a, 210b, 210c, 210d) of the battery system (200).

7. A computer implemented method (500) comprising:
controlling (530), by processing circuitry (110) of a computer system (100), a first battery pack (210a) and a second battery pack (210b) to provide pre-charge to a load (29),
configuring (540), by the processing circuitry (110) of the computer system (100), the first battery pack (210a) to provide pre-charge in a supporting pre-charge mode (324), and
during pre-charge in the supporting pre-charge mode (324), monitoring (552a), by the processing circuitry (110) of the computer system (100), a first voltage difference indicator (316a) indicating a difference between a load voltage (314) and a first battery pack voltage (312a), and
responsive to the first voltage difference indicator (316a) indicating that first battery pack voltage (312a) is at or below the load voltage (314), controlling (570), by the processing circuitry (110) of the computer system (100), the first battery pack (210a) to discontinue pre-charge of the load (29).

8. The computer implemented method (500) of claim 7 further comprising:
monitoring (552a), by the processing circuitry (110) of the computer system (100), a pre-charge current (313a) between the first battery pack (210a) and the load (29), and
determining (560), by the processing circuitry (110) of the computer system (100), the first voltage difference indicator (316a) based on the pre-charge current (313a).

9. The computer implemented method (500) of claim 7 or 8 further comprising:
monitoring (552a), by the processing circuitry (110) of the computer system (100), the first battery pack voltage (312a) and the load voltage (314), and
determining (560), by the processing circuitry (110) of the computer system (100), the first voltage difference indicator (316a) based on the first battery pack voltage (312a) and the load voltage (314).

10. The computer implemented method (500) of any one of claims 7 to 9 further comprising:
during pre-charge in the supporting pre-charge mode (324), monitoring (552b), by the processing circuitry (110) of the computer system (100), a second voltage difference indicator (316b) indicating a difference between the load voltage (314) and a second battery pack voltage (312b), and
responsive to the second voltage difference indicator (316b) indicating that the second battery pack voltage (312b) is at or below the load voltage (314), controlling (570), by the processing circuitry (110) of the computer system (100), the first battery pack (210a) to discontinue pre-charge of the load (29).

11. The computer implemented method (500) of any one of claims 7 to 10 further comprising:
obtaining (510), by the processing circuitry (110) of the computer system (100), at least one of an open cell voltage (312') or a loaded cell voltages (312) of each battery pack (210a, 210b, 210c, 210d) of a battery system (200) comprising more than two battery packs (210a, 210b, 210c, 210d), and
selecting (520), by the processing circuitry (110) of the computer system (100), the first battery pack (210a) and the second battery pack (210b) by selecting a pair of battery packs (210a, 210b, 210c, 210d) of the two or more battery packs (210a, 210b, 210c, 210d) of the battery system (200) having the lowest difference in open cell voltages (312a', 312b', 312c', 312d') and/or loaded cell voltages (312a, 312b, 312c, 312d) of each pair of battery packs (210a, 210b, 210c, 210d) of the two or more battery packs (210a, 210b, 210c, 210d) of the battery system (200).

12. A vehicle (10) comprising a first battery pack (210a), a second battery pack (210b) and the computer system (100) of any one of claims 1 to 6 operatively connected to the first battery pack (210a) and the second battery pack (210b).

13. The vehicle (10) of claim 12, wherein the vehicle (10) is a heavy-duty vehicle.

14. A computer program product (600) comprising program code (810) for performing, when executed by a processing circuitry (110) of a computer system (100), the computer implemented method (500) of any of claims 7 to 11.

15. A non-transitory computer-readable storage medium (700) comprising instructions (810), which when executed by a processing circuitry (110) of a computer system (100), cause the processing circuitry (110) to perform the computer implemented method (500) of any of claims 7 to 11.
